# EUROPÄISCHE PATENTSCHRIFT

(11) **EP 1 693 228 B1**
(45) Veröffentlichungstag und Bekanntmachung des Hinweises auf die Patenterteilung: **07.04.2010**
(21) Anmeldenummer: 06000141.9
(22) Anmeldetag: 04.01.2006
(51) Int. Cl.: B60B 33/00

(54) **Antriebsvorrichtung für eine Lenkrolle eines Möbelstücks**
Driving mechanism for castor of furniture
Dispositif d'entraînement pour roulette de meuble

(30) Priorität: 21.02.2005 DE 102005007898
(43) Veröffentlichungstag der Anmeldung: 23.08.2006
(73) Patentinhaber: Waldner Labor- und Schuleinrichtungen GmbH, 01097 Dresden (DE)
(72) Erfinder: Keibach, Dieter, 88267 Vogt (DE)
(74) Vertreter: Kilian, Helmut

(56) Entgegenhaltungen:
- DE-A1- 3 943 260
- DE-A1- 19 949 351
- GB-A- 2 183 566
- US-A- 5 950 749

## Beschreibung

Die Erfindung betrifft eine Antriebsvorrichtung für eine Lenkrolle eines Möbelstücks oder Gerätes, insbesondere eines Schwerlastmöbelstücks oder -gerätes, das z.B. in einem Laboratorium oder im Krankenhaus zum Einsatz kommt.

Eine solche Antriebsvorrichtung gemäß Oberbegriff des Anspruchs 1 ist beispielsweise aus der US 5 950 749 A bekannt.

Möbelstücke und Geräte mit großer Belastung, wie beispielsweise Labormöbelstücke, Lebenserhaltungsgeräte in Krankenhäusern oder Krankenbetten werden unter Verwendung von Lenkrollen, insbesondere Doppellenkrollen mobil gestaltet, die vorzugsweise um 360° drehend ausgebildet sind und deren Lenkung manuell erfolgt.

Eine Doppellenkrolle besteht im Wesentlichen aus zwei Rädern, die auf einer gemeinsamen Achse angeordnet sind, wobei zwischen den beiden Rädern ein Rollenkörper vorgesehen ist, in dem eine Lenkachse angeordnet ist, die fest mit einer Montageplatte verbunden ist, die am Unterbau des Möbelstückes befestigt wird.

Die oben erwähnte US 5,950,749 betrifft einen elektrisch betriebenen Rollstuhl.

Die der Erfindung zugrunde liegende Aufgabe besteht darin, eine Antriebsvorrichtung für eine derartige Lenkrolle eines Möbelstücks oder Gerätes zu schaffen, mit der die Lenkrolle bei Schwerbelastung angetrieben werden kann.

Diese Aufgabe wird gemäß der Erfindung durch die Ausbildung gelöst, die im Anspruch 1 angegeben ist.

Besonders bevorzugte Weiterbildungen und Ausgestaltungen der erfindungsgemäßen Vorrichtung sind Gegenstand der Ansprüche 2 und 3.

Im Folgenden wird anhand der zugehörigen Zeichnungen ein besonderes bevorzugtes Ausführungsbeispiel der erfindungsgemäßen Vorrichtung näher beschrieben. Es zeigen
Fig. 1 in einer schematischen perspektivischen Ansicht das Ausführungsbeispiel der erfindungsgemäßen Antriebsvorrichtung,
Fig. 2 in einer perspektivischen Ansicht den bei dem Ausführungsbeispiel von Fig. 1 dargestellten Montagewinkel im Einzelnen,
Fig. 3 eine Schnittansicht durch die Lenkachse einer Doppellenkrolle bei dem in Fig. 1 dargestellten Ausführungsbeispiel und
Fig. 4 eine perspektivische Ansicht des bei dem in Fig. 1 dargestellten Ausführungsbeispiels vorgesehen Zahnkranzadapters.

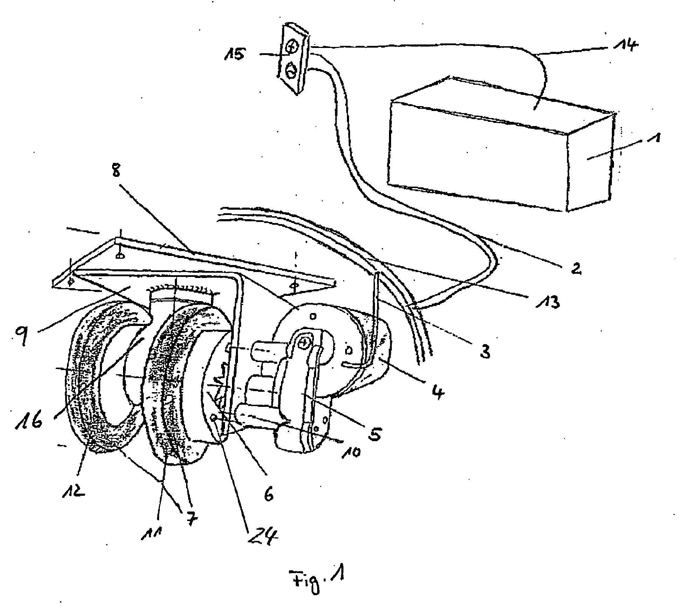

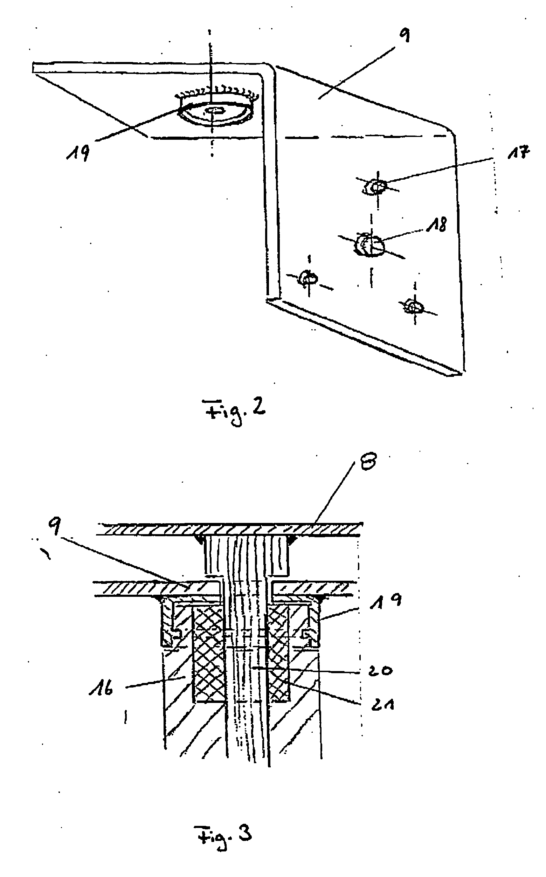

Wie es in Fig. 1 dargestellt ist, umfasst eine Möbelrolle, insbesondere die in Fig. 1 dargestellte Doppellenkrolle 7 zwei Räder 11 und 12, die auf einer gemeinsamen Achse sitzen, wobei zwischen den Rädern ein Rollenkörper 16 vorgesehen ist, in dem eine Lenkachse 20 (Fig. 3) verläuft, die drehend, insbesondere um 360° drehend in einer Montageplatte 8 sitzt, die am Unterbau des Möbelstückes zu befestigen ist, für die die Doppellenkrolle 7 vorgesehen ist.

Bei dem in Fig. 1 dargestellten Ausführungsbeispiel ist das Rad 12 ein freilaufendes Rad und ist das Rad 11 das angetriebene Rad. Zu diesem Zweck ist ein Montagewinkel 9 vorzugsweise aus Metall mit einem Schenkel auf den Rollenkörper so gepasst, dass der Montagewinkel 9 zusammen mit dem Rollenkörper 16 und damit der Doppellenkrolle 7 dreht. Das andere abgewinkelte Teil des Montagewinkels 9 verläuft seitlich vom angetriebenen Rad 11 und trägt einen Bausatz aus einem Motor 4, insbesondere einem elektrischen 12 oder 24 Volt-Motor und einem angebauten Getriebe 5.

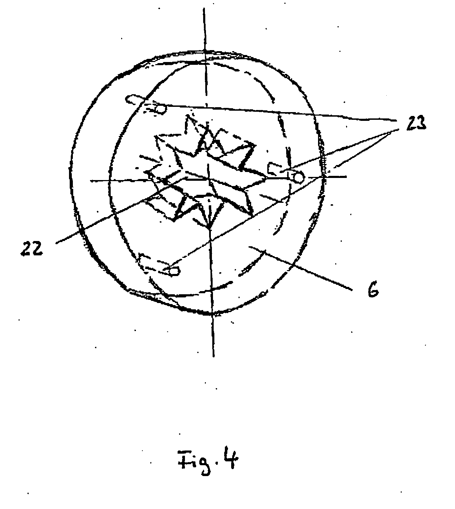

Zwischen dem abgewinkelten Teil des Montagewinkels 9, an dem der Motorgetriebebausatz angeordnet ist, und dem angetriebenen Rad 11 befindet sich ein Adapter, bei dem dargestellten Ausführungsbeispiel ein Zahnkranzadapter 6, der fest mit dem angetriebenen Rad 11 verbunden ist. In den Innenzahnkranz 22 (Fig. 4) des Zahnkranzadapters 6 greift die Ausgangswelle des Getriebes 5 mit einem angesetzten Zahnrand formschlüssig ein.

Das Getriebe 5 ist über Befestigungsschrauben 10 am Montagewinkel 9 befestigt. Der Zahnkranzadapter 6 ist über Befestigungsschrauben 24 am Rad 11 befestigt.

Der Elektromotor 4 wird über einen Schleifkontakt 3 und einen Kontaktring 13 elektrisch versorgt, der im Montageboden des Möbelstücks oder in der Montageplatte 8 integriert ist. Die Stromversorgung 14 besteht aus einer Batterie 1, die über einen Tastschalter 15 und ein Versorgungskabel 2 mit dem Kontaktring 13 verbunden ist. Die Batterie 1 ist wieder aufladbar.

Der Tastschalter 15 dient dazu, zwischen der Vorwärts- und dem Rückwärtsantrieb der Antriebsvorrichtung umzuschalten.

Im Falle einer motorischen Lenkung der Doppellenkrolle ist am freilaufenden Rad 12 ein zweiter Elektromotor vorgesehen, der durch gegenläufige Drehrichtung zum angetriebenen Rad 11 die Doppellenkrolle 7 dreht und damit lenkt. Die Lenkung kann über eine Fernbedienung erfolgen, die aus einem Funksender und einem dementsprechenden Empfänger an der Antriebsvorrichtung besteht, über dessen Empfangssignal der zweite Motor angesteuert wird.

Wie es im Einzelnen in Fig. 2 dargestellt ist, weist der Montagewinkel 9 Befestigungsbohrungen 17 auf, durch die die Befestigungsschrauben 10 führen, mit denen das Getriebe 5 am Montagewinkel 9 befestigt ist. In demselben Schenkel des Montagewinkels 9 befindet sich weiterhin eine Achsbohrung 18, durch die die Ausgangswelle des Getriebes geführt ist, die mittels des aufgesetzten Zahnrads in den Zahnkranzadapter 6 formschlüssig eingreift.

An dem anderen Schenkel des Montagewinkels 9 ist zur Montage am Rollenkörper 16 ein Schnappverschluss 19 vorgesehen, mit dem der Montagewinkel 9 auf den Rollenkörper 16 aufgesetzt ist.

Wie es in Fig. 3 dargestellt ist, ist die Lenkachse 20 der Doppellenkrolle 7 im Inneren des Rollenkörpers 16 über ein Gleitlager 21 geführt. Der Schnappverschluss 19 greift in der in Fig. 3 darstellten Weise in den Rollenkörper 16 ein. Die Lenkachse 20 ist an ihrem Ende über ein Kugellager im Rollenkörper 16 gelagert.

Fig. 4 zeigt den Zahnkranzadapter 6 im Einzelnen..

Der Zahnkranzadapter 6 besteht aus einer Kunststoffscheibe mit Befestigungsbohrungen 23 für die Befestigungsschrauben 24 und einem inneren Zahnkranz 22, der in Form eines Zahnkranzausschnittes ausgebildet ist und das auf der Ausgangswelle des Getriebes 5 befestigte Zahnrad vorzugsweise formschlüssig aufnimmt. Es sind allerdings auch andere Formen der Kupplung zwischen der Ausgangswelle des Getriebes 5 und dem Adapter 6 denkbar.

Die oben beschriebene Antriebsvorrichtung eignet sich insbesondere als Radantrieb für eine Möbelrolle mit maximaler Bauhöhe von 105 mm und hoher Belastung, wie es beispielsweise bei mobilen Abzügen, Küchenzeilen, Demonstrationstischen, Lebenserhaltungsgeräten, Analysegeräten, Krankenbetten oder ähnlichen mobilen Einrichtungen der Fall ist, die in Laboren, Krankenhäusern, Pflegeheimen oder dgl. zum Einsatz kommen.

## Patentansprüche

1. Antriebsvorrichtung für eine Lenkrolle (7) eines Möbelstücks oder Gerätes, insbesondere eines Schwerlastmöbelstücks oder -gerätes, bei der
- an der Lenkrolle (7) ein sich drehendes Halteelement (9) vorgesehen ist, das einen Antriebsmotor (4) für die Lenkrolle hält, **dadurch gekennzeichnet, dass** an den Antriebsmotor ein Getriebe (5) angebaut ist und
- an der Lenkrolle (7) ein Adapter (6) angebracht ist, in den die Ausgangswelle des Getriebes (5) formschlüssig eingreift, wobei auf der Ausgangswelle des Getriebes (5) ein Zahnrad sitzt, mit dem die Ausgangswelle in den Adapter (6) eingreift und der Adapter (6) eine Scheibe mit einem Zahnkranzausschnitt zur Aufnahme der Ausgangswelle des Getriebes (5) aufweist.

2. Antriebsvorrichtung nach Anspruch 1, **dadurch gekennzeichnet, dass** das Halteelement (9) ein Winkel, insbesondere Metallwinkel ist, der an einem Rollenkörper der Lenkrolle so angebracht ist, dass er sich mit dieser dreht.

3. Antriebsvorrichtung nach Anspruch 1 oder 2, **dadurch gekennzeichnet, dass** die Lenkrolle eine Doppellenkrolle (7) ist, auf deren Rollenkörner (16) das Halteelement (9) über einen Schnappverschluss (19) aufgesetzt ist.

## Claims

1. Driving device for a castor (7) of a furniture or an apparatus, in particular of a heavy duty furniture or apparatus, wherein
- a rotatable support element (9) is provided on the castor (7) which support element (9) supports a driving motor (4) for the castor, **characterized in that** a gear (5) is fixed to the driving motor, and
- an adapter (6) which engages the output shaft of the gear (5) in a form-fitting fashion is attached to the castor (7), wherein a toothed wheel with which the output shaft engages the adapter (6) sits on the output shaft of the gear (5), and the adapter (6) comprises a disc having a toothed section for receiving the output shaft of the gear (5).

2. Driving device according to claim 1, **characterized in that** the support element (9) is an elbow, in particular a metal elbow, which is attached to a rolling body of the castor such that they collectively rotate.

3. Driving device according to claim 1 or 2, **characterized in that** the castor is a dual castor (7), the rolling body (16) of which bears the support element (9) via a snap fit (19).

## Revendications

1. Dispositif d'entraînement pour une roulette de guidage (7) d'un meuble ou d'un appareil, en particulier un meuble ou un appareil de poids élevé, dans lequel
→ il est prévu sur la roulette de guidage (7) un élément de fixation (9) rotatif, qui porte un moteur d'entraînement (4) pour la roulette de guidage (7), **caractérisé en ce qu'**un engrenage (5) est monté sur le moteur d'entraînement, et
→ sur la roulette de guidage (7) est monté un adaptateur (6), dans lequel s'engage par emboîtement l'arbre de sortie de l'engrenage (5), sur l'arbre de sortie de l'engrenage (5) étant montée une roue dentée, avec laquelle l'arbre de sortie s'engage dans l'adaptateur (6) et lendit adaptateur (6) comporte un disque avec une découpe en couronne dentée destinée à recevoir l'arbre de sortie de l'engrenage (5).

2. Dispositif d'entraînement selon la revendication 1, **caractérisé en ce que** l'élément de fixation (9) est une cornière, en particulier une cornière métallique qui est fixée à un corps de la roulette de guidage, de telle sorte qu'elle tourne avec celui-ci,

3. Dispositif d'entraînement selon la revendication 1 ou 2, **caractérisé en ce que** la roulette de guidage est une double roulette de guidage (7), sur le corps (16) de laquelle l'élément de f ixati on (9) est attaché par un assemblage à encliquetage (19).
